# EUROPEAN PATENT APPLICATION

(11) **EP 4 738 458 A1**
(43) Date of publication of application: **06.05.2026**
(21) Application number: 24852017.3
(22) Date of filing: 28.05.2024
(51) Int. Cl.: H01M 4/36, H01M 4/525, C01G 53/00, H01M 10/052, H01M 10/0562, C01B 17/22, H01M 4/02

(54) **CATHODE ACTIVE MATERIAL, METHOD FOR PREPARING SAME, CATHODE COMPRISING SAME, AND ALL-SOLID STATE BATTERY**

(30) Priority: 08.08.2023 KR 20230103399
(71) Applicant: SK On Co., Ltd., Seoul 03161 (KR)
(72) Inventor: YOON, Ji-Young, Daejeon 34124 (KR)
(74) Representative: Prüfer & Partner mbB Patentanwälte · Rechtsanwälte
(86) International application number: PCT/KR2024/007203
(87) International publication number: WO 2025/033659

(57) **Abstract**

A cathode active material, according to one embodiment of the present invention, comprises: a core including a lithium-transition metal composite oxide; a first coating layer formed on the surface of the core; and a second coating layer formed on the surface of the first coating layer, wherein the first coating layer includes a lithium-transition metal composite oxide having a structure that is different from the lithium-transition metal composite oxide included in the core, and the second coating layer includes a sulfur compound.

## Description

### Technical Field

The present disclosure relates to a cathode active material, a method for preparing the same, a cathode including the same, and an all-solid-state battery.

### Background Art

Recently, due to environmental issues such as global warming or the like, interest in eco-friendly electric vehicles that may be replaced with fossil fuel-based vehicles has increased. Lithium secondary batteries may be one of the primary energy sources leading existing electric vehicle market due to their high energy density and advanced industrial technology. However, existing lithium secondary batteries utilizing liquid electrolytes such as organic solvents and the like may have issues such as a risk of ignition due to leakage of the electrolyte upon impact, and expansion, explosion, or the like of the batteries due to chemical decomposition and gas generation of the electrolyte. Therefore, in order to solve the problems, an all-solid-state battery to which a solid electrolyte is applied is attracting attention as a next-generation energy source, and research and development thereon are actively underway.

### Disclosure of Invention

### Technical Problem

An aspect of the present disclosure is to provide a cathode active material capable of improving a lifespan characteristic of a battery.

Another aspect of the present disclosure is to provide a cathode active material having high capacity.

Another aspect of the present disclosure is to provide a cathode active material having excellent resistance performance.

Another aspect of the present disclosure is to provide an all-solid-state battery having excellent electrochemical performance.

Another aspect of the present disclosure is to provide an all-solid-state battery having excellent safety.

### Solution to Problem

A cathode active material according to an embodiment includes a core including a lithium-transition metal composite oxide; and a first coating layer formed on a surface of the core; and a second coating layer formed on a surface of the first coating layer, wherein the first coating layer includes a lithium-transition metal composite oxide having a different structure from the lithium-transition metal composite oxide included in the core, and the second coating layer includes a sulfur compound.

The core may include the lithium-transition metal composite oxide having a layered structure.

The core may include the lithium-transition metal composite oxide according to the following Chemical Formula 1:

[Chemical Formula 1] LiₐNi_{b}M_{c}O₂

In Chemical Formula 1,
M is at least one element selected from Na, Mg, Ca, Ti, Y, Zr, Hf, V, Nb, Ta, Cr, Mo, W, Mn, Co, Fe, Cu, Ag, Zn, B, Al, Ga, C, Si, Sn, and Ba, and 0.90<a<1.5, 0.33≤b≤1, 0≤c≤0.7.

The first coating layer may include the lithium-transition metal composite oxide having a spinel structure.

The first coating layer may further include at least one of the lithium-transition metal composite oxide having a rock salt structure or the lithium-transition metal composite oxide having a layered structure.

The first coating layer may include the lithium-transition metal composite oxide according to the following Chemical Formula 2:

[Chemical Formula 2] LiₓM_{y}O_{z}

In Chemical Formula 2,
M is at least one element selected from Ni, Co, Mn, Na, Mg, Ca, Ti, Y, Zr, Hf, V, Nb, Ta, Cr, Mo, W, Fe, Cu, Ag, Zn, B, Al, Ga, C, Si, Sn, and Ba, and 0≤x≤4, 0≤y≤4, and 0≤z≤8.

A thickness of the first coating layer may be 0.1 to 500 nm.

The cathode active material may have a cation mixing ratio of 7% or less.

The sulfur compound may include at least one compound according to the following Chemical Formula 3:

[Chemical Formula 3] LiₓM_{y}S_{z}O_{f}

In Chemical Formula 3,
M is selected from an alkali metal, an alkaline earth metal, a transition metal, a Group 13 element, a Group 14 element, a rare earth element, a substituted or unsubstituted aliphatic hydrocarbon group, and combinations thereof, and 0≤x≤10, 0≤y≤10, 0<z≤10, and 0≤f≤24.

The sulfur compound may include sulfur oxide.

The sulfur oxide may be present in an amount of 200 to 8,000 ppm, based on a total weight of the second coating layer.

The second coating layer may further include at least one element selected from P, B, Si, Al, and W.

A method for preparing a cathode active material according to an embodiment prepares the cathode active material according to any one of the embodiments described above.

The method may include a base material preparation operation of forming a core by a dry heat treatment process for a mixture of a precursor including a transition metal raw material and a lithium raw material; and a base material pretreatment operation of forming a precursor coating layer on a surface of the core.

The method may further include a coating layer formation operation of forming a first coating layer and a second coating layer.

In the coating layer formation operation, the first coating layer may be formed by a heat treatment process for the core.

In the coating layer formation operation, the second coating layer may be formed of a complex sulfate compound according to the following Chemical Formula 4:

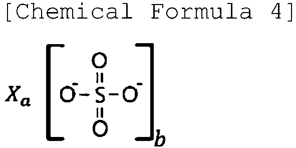

In the Chemical Formula 4,
X is selected from an alkali metal, an alkaline earth metal, a transition metal, a Group 13 element, a Group 14 element, a Group 16 element, a rare earth element, a substituted or unsubstituted aliphatic hydrocarbon group, and a combination thereof, and 1≤a≤5 and 1≤b≤5.

In the coating layer formation operation, the heat treatment process may be performed in air at a temperature of 300°C or less and for a time of 20 hours or less.

A cathode according to an embodiment includes the cathode active material according to any one of the embodiments described above.

An all-solid-state battery according to an embodiment includes the cathode according to any one of the embodiments described above.

The all-solid-state battery may further include a sulfide-based solid electrolyte.

The sulfide-based solid electrolyte may be an argyrodite-based solid electrolyte.

### Advantageous Effects of Invention

According to an embodiment of the present disclosure, direct contact between a solid electrolyte and a cathode active material may be prevented.

According to another embodiment of the present disclosure, lifespan performance of a battery may be improved.

According to another embodiment of the present disclosure, smooth movement of lithium ions in a battery may be induced.

According to another embodiment of the present disclosure, occurrence of leakage current in a battery may be reduced.

According to another embodiment of the present disclosure, a cathode active material of high capacity having excellent resistance performance may be provided.

According to another embodiment of the present disclosure, an all-solid-state battery having excellent electrochemical performance may be provided.

According to another embodiment of the present disclosure, an all-solid-state battery having excellent safety may be provided.

### Brief Description of Drawings

FIG. 1 is a conceptual diagram illustrating a form of a cathode active material according to an embodiment.
FIGS. 2a and 2b are conceptual diagrams sequentially illustrating a method for preparing a cathode active material according to an embodiment.
FIG. 3a is a view illustrating results of evaluating chemical charge/discharge capacity of batteries including cathode active materials according to Inventive Example and Comparative Examples.
FIG. 3b is a view illustrating results of evaluating discharge capacity values according to the number of cycles of batteries including cathode active materials according to Inventive Example and Comparative Examples.
FIG. 3c is a view illustrating results of evaluating discharge capacity retention rates according to the number of cycles of batteries including cathode active materials according to Inventive Example and Comparative Examples.
FIG. 4 is a view illustrating results of evaluating resistance characteristics of batteries including cathode active materials according to Inventive Example and Comparative Examples.

### Best Mode for the Invention

Hereinafter, preferred embodiments will be described with reference to various embodiments. However, the embodiments are not limited to embodiments described below, and may be modified in various other forms.

In this specification, a "base material" refers to a lithium-transition metal composite oxide corresponding to a core (100), refers to a material obtained by mixing a precursor including a transition metal raw material with a lithium raw material, and sintering the mixture, and may have substantially the same composition as the core (100).

For commercialization of an all-solid-state battery, which may be a next-generation energy source, interfacial stability between an active material and a solid electrolyte may be required. When a cathode active material is in direct contact with the solid electrolyte, a resistive layer may be formed due to interfacial diffusion of constituent elements. Furthermore, as driving cycles of the battery progresses, the cathode active material may undergo repeated shrinkage and expansion. Cracks resulting from this volumetric change may lead to contact with the electrolyte, desorption therefrom, partial generation of an inactivated cathode active material, and may thus restrict movement of lithium ions. This may in turn lead to performance deterioration of the battery due to overvoltage. Therefore, to practically overcome the problems, it may be necessary to secure interfacial stability by applying a suitable surface film to the cathode active material.

According to an embodiment, to address the problem, a separate coating layer including an active material having a spinel structure may be formed on a surface of the cathode active material. However, such a single coating layer alone may have limitations in controlling interfacial diffusion between the cathode active material and the solid electrolyte.

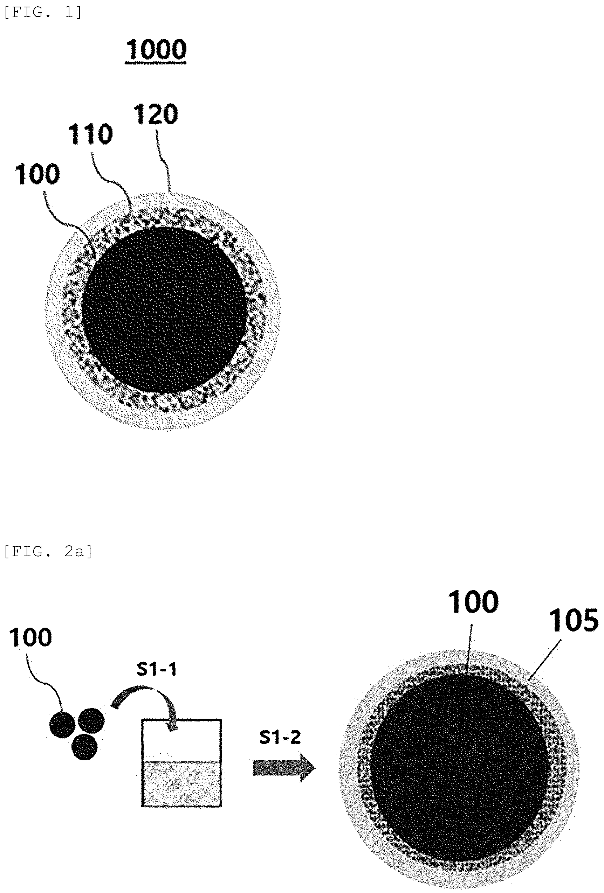

According to an embodiment, a multi-coating layer structure may improve lifespan performance of the battery by suppressing direct contact between the solid electrolyte and the active material, interfacial diffusion of constituent elements, a side reaction, or the like. Furthermore, by facilitating movement of lithium ions and reducing leakage current, a cathode active material of high capacity having excellent resistance performance may be provided. Specific details will be disclosed below with reference to FIGS. 1 to 4.

FIG. 1 is a conceptual diagram illustrating a form of a cathode active material according to an embodiment.

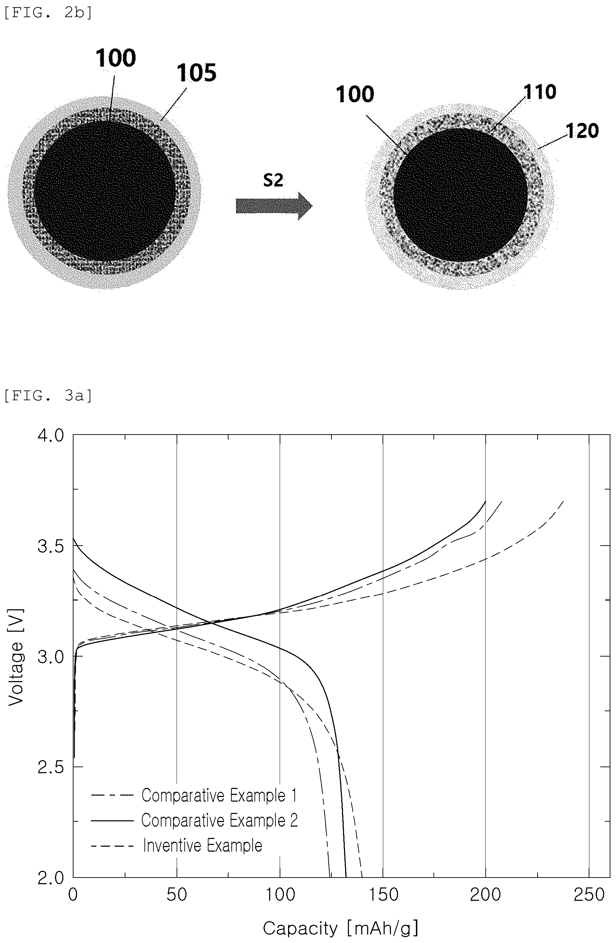

FIGS. 2a and 2b are conceptual diagrams sequentially illustrating a method for preparing a cathode active material according to an embodiment.

FIG. 3a is a view illustrating results of evaluating chemical charge/discharge capacity of batteries including cathode active materials according to Inventive Example and Comparative Examples.

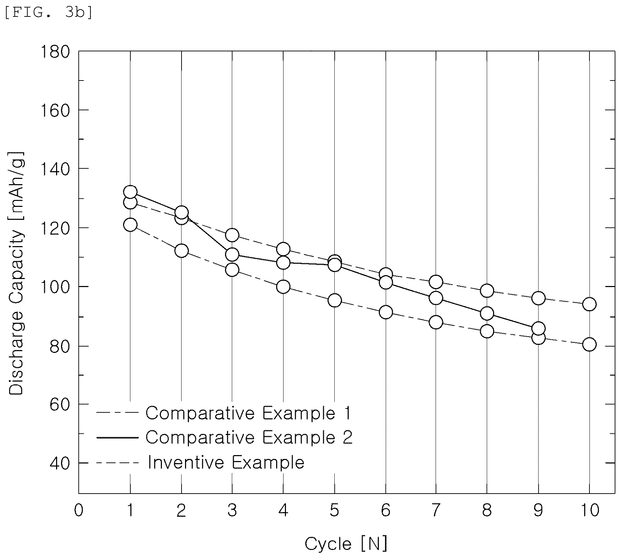

FIG. 3b is a view illustrating results of evaluating discharge capacity values according to the number of cycles of batteries including cathode active materials according to Inventive Example and Comparative Examples.

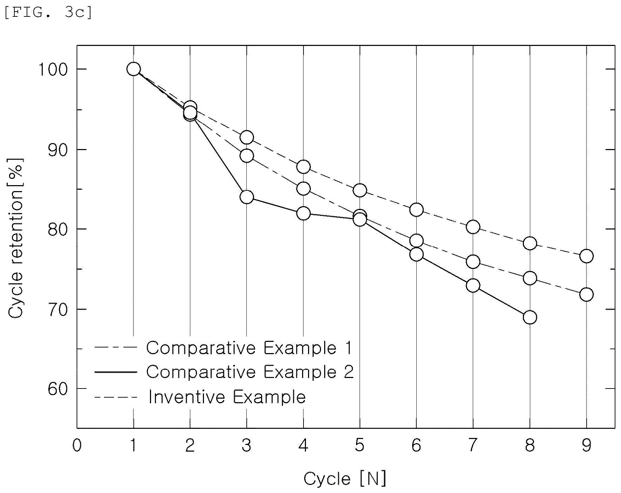

FIG. 3c is a view illustrating results of evaluating discharge capacity retention rates according to the number of cycles of batteries including cathode active materials according to Inventive Example and Comparative Examples.

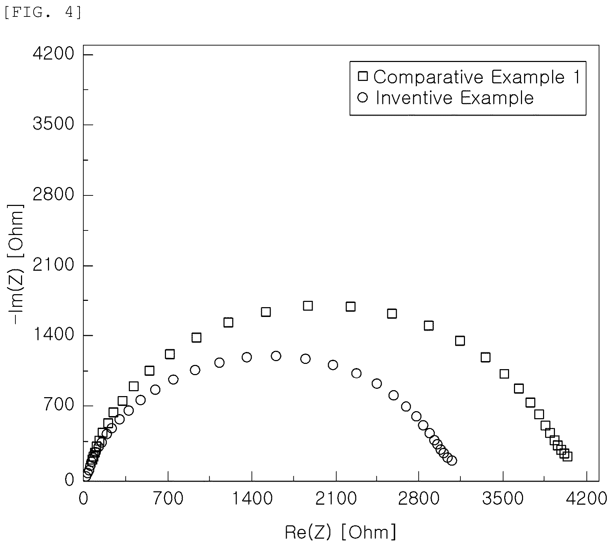

FIG. 4 is a view illustrating results of evaluating resistance characteristics of batteries including cathode active materials according to Inventive Example and Comparative Examples.

### Cathode Active Material

According to an embodiment, a cathode active material (1000) may include a core (100) including a lithium-transition metal composite oxide; and a first coating layer (110) formed on a surface of the core; and a second coating layer (120) formed on a surface of the first coating layer, wherein the first coating layer includes a lithium-transition metal composite oxide having a different structure from the lithium-transition metal composite oxide included in the core, and the second coating layer includes a sulfur compound.

The cathode active material (1000) may have a multilayer structure, specifically a bilayer structure, formed on a surface thereof, resulting in excellent structural stability and improved electrochemical performance such as lifespan characteristics and the like. Hereinafter, the core (100), the first coating layer (110), and the second coating layer (120) of the cathode active material will be described in more detail.

### <Core>

The core (100) may correspond to a base material of the cathode active material, which may include a lithium-transition metal composite oxide, and refers to a portion on a surface on which a coating layer, which will be described in detail below, is formed. Specifically, the core (100) may be substantially composed of the lithium-transition metal composite oxide in particle form. That is, the core itself may be a lithium-transition metal composite oxide particle.

The lithium-transition metal composite oxide included in the core (100) may have a layered structure. That is, the core may include the lithium-transition metal composite oxide having a layered structure. The layered structure of the lithium-transition metal composite oxide may be a structure in which lithium and a transition metal are arranged in different layers. The lithium-transition metal composite oxide having the layered structure may have a lithium diffusion coefficient that may be over 10,000 times higher and an electrical conductivity that may be over 1,000 times higher than lithium iron phosphate (LFP) having an olivine structure, thus offering an advantage of high energy density.

The lithium-transition metal composite oxide included in the core (100) may be represented by the following Chemical Formula 1. That is, the core (100) may include the lithium-transition metal composite oxide according to the following Chemical Formula 1.

[Chemical Formula 1] LiₐNi_{b}M_{c}O₂

In Chemical Formula 1,
M is at least one element selected from Na, Mg, Ca, Ti, Y, Zr, Hf, V, Nb, Ta, Cr, Mo, W, Mn, Co, Fe, Cu, Ag, Zn, B, Al, Ga, C, Si, Sn, and Ba, and 0.90<a<1.5, 0.33≤b≤1, 0≤c≤0.7. When the core (100) includes the lithium-transition metal composite oxide according to Chemical Formula 1, capacity of the cathode active material may be improved while more easily forming the first coating layer (110) described below, through the core.

The lithium-transition metal oxide may be a secondary particle formed by agglomerating a plurality of primary particles into a single particle, or may be in a form of a single particle. The single particle form described above may mean that they exist in a form in which the primary particles are individually or partially aggregated, or may mean that they exist in a single crystal (SC) form. In embodiments, the cathode active material may include a single particle, a secondary particle, or a mixture thereof.

### <First Coating Layer>

The first coating layer (110) may be a coating layer formed on a surface of the core (100), and may include a lithium-transition metal composite oxide having a different structure from the lithium-transition metal composite oxide included in the core. The first coating layer (110) may improve ion conductivity and capacity of the cathode active material by facilitating relatively smooth movement of lithium ions, thereby contributing to maintaining a high capacity retention rate even after the battery undergoes a plurality of charge/discharge cycles.

The lithium-transition metal composite oxide included in the first coating layer (110) may have a spinel structure. That is, the first coating layer (110) may include the lithium-transition metal composite oxide having a spinel structure. In this case, the lithium-transition metal composite oxide included in the core may have a layered structure. When the lithium-transition metal composite oxide has the spinel structure, which may be a stable three-dimensional channel structure, a lithium diffusion barrier may be relatively low compared to the layered structure, such that conductivity of lithium ions may be excellent, and capacity of the cathode active material may be further improved.

The first coating layer (110) may further include at least one of the lithium-transition metal composite oxide having a rock salt structure or the lithium-transition metal composite oxide having a layered structure. Specifically, the first coating layer

(110) may further include, in addition to the lithium-transition metal composite oxide having a spinel structure, at least one of the lithium-transition metal composite oxide having a rock salt structure or the lithium-transition metal composite oxide having a layered structure.

The first coating layer (110) may be formed on a surface of the core (100) through a heat treatment process, and a structure of the lithium-transition metal composite oxide included in the first coating layer (110) may be changed, depending on the heat treatment temperature. Therefore, during a process of forming the first coating layer (110), the lithium-transition metal composite oxide having a structure other than the spinel structure may be formed in the first coating layer, and the lithium-transition metal composite oxide having such a structure may remain in the first coating layer of the cathode active material finally manufactured. The process of forming the first coating layer or the like will be described in more detail below.

The lithium-transition metal composite oxide included in the first coating layer (110) may be represented by the following Chemical Formula 2. That is, the first coating layer (110) may include the lithium-transition metal composite oxide according to the following Chemical Formula 2.

[Chemical Formula 2] LiₓM_{y}O_{z}

In Chemical Formula 2,
M is at least one element selected from Ni, Co, Mn, Na, Mg, Ca, Ti, Y, Zr, Hf, V, Nb, Ta, Cr, Mo, W, Fe, Cu, Ag, Zn, B, Al, Ga, C, Si, Sn, and Ba, and 0≤x≤4, 0≤y≤4, and 0≤z≤8. When the first coating layer (110) includes the lithium-transition metal composite oxide according to Chemical Formula 2, movement of lithium ions through the first coating layer may be facilitated, thereby improving electrochemical performance of the cathode active material to a superior level, and also ensuring structural stability of the first coating layer.

A thickness of the first coating layer (110) may range from 0.1 to 500 nm. Specifically, a thickness of the first coating layer may be 5 nm or more and 100 nm or less. A method for measuring the thickness of the first coating layer (110) is not particularly limited, and for example, the thickness may be measured using a transmission electron microscope (TEM) and fast Fourier transform (FFT) analysis.

The cathode active material (1000) may have a cation mixing ratio of 7% or less. Specifically, the cathode active material (1000) may have a cation mixing ratio of 5% or less, and may have a cation mixing ratio of 2.2% or more.

The cation mixing ratio may be an indicator that may confirm a degree of hybrid rearrangement of cations such as lithium, a transition metal, and the like, when the cathode active material is analyzed through X-ray diffraction (XRD), and may be changed depending on a structure, a composition, or the like of the cathode active material.

For example, in the cathode active material of a layered structure including lithium (Li) and nickel (Ni), Li and Ni may be arranged in different layers, but, as an Ni amount increases or the number of charge/discharge cycles increases, positions of Li and Ni may be exchanged. When the cations included in the cathode active material of a layered structure undergo hybrid rearrangement, the layered structure may be changed to the spinel structure or the rock salt structure.

Therefore, since the first coating layer includes the lithium-transition metal composite oxide having a different structure from the core, when the cation mixing ratio is measured with regard to the cathode active material including the core (100) and the first coating layer (110), a degree of formation of the first coating layer in the cathode active material may be determined. For example, as the measured cation mixing ratio of the cathode active material increases, the first coating layer (110) may be judged as being thicker.

When the cation mixing ratio of the cathode active material (1000) is within the range, the cathode active material having excellent performance may be manufactured by forming the first coating layer in an appropriate manner without deteriorating effects due to the core.

### <Second Coating Layer>

The second coating layer (120) may be a coating layer including a sulfur compound, may be formed on a surface of the first coating layer (110), and may contribute thus to further improving interfacial stability and electrochemical performance of the cathode active material. Specifically, the sulfur compound may be coupled to lithium remaining on a surface of the cathode active material to reduce leakage current and improve resistance characteristics.

The sulfur compound may include at least one compound according to the following Chemical Formula 3:

[Chemical Formula 3] LiₓM_{y}S_{z}O_{f}

In Chemical Formula 3,
M is selected from an alkali metal, an alkaline earth metal, a transition metal, a Group 13 element, a Group 14 element, a rare earth element, ammonium ion, a substituted or unsubstituted aliphatic hydrocarbon group, and combinations thereof, and 0≤x≤10, 0≤y≤10, 0<z≤10, and 0≤f≤24. When the sulfur compound included in the second coating layer (120) includes the type of compound described above, diffusion and side reactions of constituent elements between the solid electrolyte and the cathode active material may be effectively suppressed, formation of an interfacial resistance layer and degradation of cycle performance of the battery may be prevented, and electrochemical performance may be improved.

The sulfur compound may include sulfur oxide, and the sulfur oxide may be included in an amount of 200 to 8,000 ppm, based on a total weight of the second coating layer (120). The sulfur oxide may be included in the second coating layer (120) in a form of sulfur monoxide (SO), sulfur dioxide (SO₂), sulfur trioxide (SO₃), or the like, and an amount of the sulfur oxide included in the second coating layer (120) may be measured by mass spectrometry using inductively coupled plasma (ICP) or the like. When the second coating layer (120) includes the sulfur oxide in the range, a capacity retention rate or the like may be further improved.

The second coating layer (120) may further include at least one element selected from P, B, Si, Al, and W.

The cathode active material (1000) may be manufactured using any one of embodiments described below.

### Method for Preparing Cathode Active Material

A method for preparing a cathode active material according to an embodiment manufactures a cathode active material (1000) according to any one of the embodiments described above. The method for preparing the cathode active material will be described in detail below with reference to FIGS. 2a and 2b.

### <Base Material Preparation Operation (S0) and Base Material Pretreatment Operation (S1)>

A method for preparing a cathode active material may include a base material preparation operation (S0) as a process/procedure for synthesizing a base material. Specifically, the base material preparation operation (S0) may form a core by a dry heat treatment process for a mixture of a precursor including a transition metal raw material and a lithium raw material. The lithium raw material may be, for example, lithium hydroxide (LiOH), lithium carbonate (Li₂CO₃), or a combination thereof. The base material manufactured through the base material preparation operation (S0) may have substantially the same composition as a core (100).

The dry heat treatment process may be performed by heat treatment at 700°C or more for 6 hours or longer.

The method for preparing the cathode active material may further include a base material pretreatment operation (S1) for the core (100), which may be the base material manufactured as described above. Specifically, the base material pretreatment operation (S1) may be an operation of forming a precursor coating layer (105) on a surface of the core, and may include a water washing process followed by a dry heat treatment process. More specifically, the base material pretreatment operation (S1) may include a water washing process (S1-1) and a dry heat treatment process (S1-2) for the core (100) (see FIG. 2a).

The water washing process (S1-1) may be performed by preparing an aqueous solution including a coating precursor in an appropriate stoichiometric ratio of a material to be coated on the cathode active material, adding the cathode active material to the aqueous solution, and then drying the cathode active material to remove moisture.

The aqueous solution may include a complex sulfate compound according to the following Chemical Formula 4:

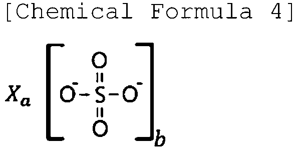

In the Chemical Formula 4,
X is selected from an alkali metal, an alkaline earth metal, a transition metal, a Group 13 element, a Group 14 element, a Group 16 element, a rare earth element, an ammonium ion, a substituted or unsubstituted aliphatic hydrocarbon group, and a combination thereof, and 1≤a≤5 and 1≤b≤5.

The dry heat treatment process (S1-2) may be performed by heat treatment at 80°C or more for 6 hours or longer.

Coating of the precursor coating layer (105) formed in the drying process after the water washing does not necessarily imply adhesion of a complete film type, and may also include cases in which some components of the precursor coating layer adhere to a surface of the core (100).

### <Coating Layer Formation Operation (S2)>

The method for preparing the cathode active material may include a coating layer formation operation (S2) of forming a first coating layer (110) and a second coating layer (120). In the coating layer formation operation (S2), the first coating layer (110) may be formed by a heat treatment process for the core (100). According to an embodiment, the coating layer formation operation (S2) may be performed by the heat treatment process for the core (100), and the first coating layer (110) may be a coating layer formed to include a spinel structure by phase transition occurring on an outer surface of the core (100) by the heat treatment process in the coating layer formation operation (S2).

According to another embodiment, the coating layer formation operation (S2) may be performed by a heat treatment process for the core (100) having the precursor coating layer (105) formed on a surface thereof. The precursor coating layer (105) may be a multilayer structure including a first precursor coating layer having a layered structure in which phase transition has partially occurred on the outer surface of the core (100); and a second precursor coating layer formed on a surface of the first precursor coating layer. In this case, the first coating layer (110) may be a coating layer formed by modifying the first precursor coating layer through a heat treatment process in the coating layer formation operation (S2) to include a spinel structure.

The heat treatment process may be performed at a temperature of 300°C or less. Specifically, a temperature of the heat treatment process may be 280°C or less or 200°C or less, or 80°C or more, 100°C or more, or 150°C or more. In addition, the heat treatment process may be performed for 20 hours or less. Specifically, a time period of the heat treatment process may be 15 hours or less or 10 hours or less, or 1 hour or more or 3 hours or more.

As described above, a structure of the lithium-transition metal composite oxide may be changed, depending on conditions of the heat treatment process for the core (100). Specifically, as a temperature increases during the heat treatment, a structure of the lithium-transition metal composite oxide may be changed in sequence of a layered structure, a spinel structure, and a rock salt structure. For example, the lithium-transition metal composite oxide may have a layered structure less than 80°C, the layered structure may be changed to the spinel structure between 80°C and 280°C, the spinel structure may be changed to the rock salt structure at temperatures exceeding 280°C, and may have a complete rock salt structure at 600°C.

Therefore, when the conditions of the heat treatment process for the core (100) such as a temperature, a time, and the like are adjusted in the range, the first coating layer (110) may be effectively formed to include the lithium-transition metal composite oxide having a different structure from the structure of the lithium-transition metal composite oxide included in the core (100).

In the coating layer formation operation (S2), the second coating layer (120) may be formed of a composite sulfate compound according to the following Chemical Formula 4:

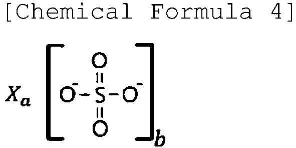

In the Chemical Formula 4,
X is selected from an alkali metal, an alkaline earth metal, a transition metal, a Group 13 element, a Group 14 element, a Group 16 element, a rare earth element, an ammonium ion, a substituted or unsubstituted aliphatic hydrocarbon group, and a combination thereof, and 1≤a≤5 and 1≤b≤5. When the type of compound above is applied as the complex sulfate compound, improved capacity and a relatively superior capacity retention rate may be expected.

According to an embodiment, the second coating layer (120) may be formed by a heat treatment process for the core (100) having the first coating layer (110) formed on a surface thereof and a mixture of the complex sulfate compound.

The method for preparing the core (100) including the first coating layer (11) and the second coating layer (120) and the mixture of the complex sulfate compound is not particularly limited, and may be applied with dry mixing or wet mixing.

The dry mixing method may be applied with a dry mixer, such as a mortar and pestle, a vortex mixer, and the like in a single form or a combined form. Furthermore, the wet mixing method may apply a method of dissolving components using a solvent, such as water, ethanol, and the like.

According to another embodiment, the second coating layer (120) may be formed by a heat treatment process for the core (100) having the precursor coating layer (105) formed on a surface thereof. In this case, the precursor coating layer (105) may be a multilayer structure including a first precursor coating layer having a layered structure in which phase transition has partially occurred on the outer surface of the core (100); and a second precursor coating layer formed on a surface of the first precursor coating layer, and the second coating layer (120) may be a coating layer formed by transforming the second precursor coating layer through a heat treatment process in the coating layer formation operation (S2).

In addition, the second precursor coating layer may be a coating layer formed in a process of forming the precursor coating layer (105) on the surface of the core (100) through a drying heat treatment process after water washing the core (100) in the base material pretreatment operation (S1), and in this case, the water washing treatment may be performed using an aqueous solution in which the complex sulfate compound according to the Chemical Formula 4 is dissolved together in water.

In the coating layer formation operation (S2), a heat treatment process for the core (100) on which the first coating layer (110) has been formed and the mixture of the complex sulfate compound; or the core (100) having the precursor coating layer (105) formed on a surface may be performed at a temperature of 300°C or less. Specifically, a temperature of the heat treatment process may be 280°C or less or 200°C or less, or 80°C or more, 100°C or more, or 150°C or more. Furthermore, the heat treatment process may be performed for 20 hours or less. Specifically, a time period of the heat treatment process may be 15 hours or less or 10 hours or less, or 1 hour or more or 3 hours or more.

An amount of the composite sulfate compound added based on a weight of the cathode active material having the first coating layer (110) formed on the surface of the core (100) may be 200 to 5,000 ppm.

The mixture or aqueous solution may further include an additional compound including at least one element selected from P, B, Si, Al, and W. When the mixture or aqueous solution may further include such additional compounds, the second coating layer (120) may further include at least one element selected from P, B, Si, Al, and W.

### Cathode and All-Solid-State Battery

A cathode according to an embodiment may include a cathode active material according to any one of embodiments. For example, the cathode may include a cathode current collector; and a cathode mixture layer formed on at least one surface of the cathode current collector, wherein the cathode mixture layer may include a cathode active material according to any one of embodiments.

Components of the cathode current collector are not particularly limited, and may include a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The cathode mixture layer may further include a binder. The binder may include, for example, one or two or more of polyvinylidene fluoride, styrene butadiene rubber (SBR), polytetrafluoroethylene, polyvinylidene fluoride, vinylidene fluoride/hexafluoropropylene copolymer, polyacrylonitrile, polymethyl methacrylate, or the like.

The cathode mixture layer may further include a conductive material. The conductive material may include, for example, one or two or more of graphite such as natural graphite, artificial graphite, and the like; a carbon-based material such as carbon black, acetylene black, Ketjen black, channel black, furnace black, lamp black, thermal black, a carbon fiber, a carbon nanotube (CNT), and the like; a metal powder or a metal fiber such as copper, nickel, aluminum, silver, and the like; a conductive whisker such as zinc oxide, potassium titanate, and the like; a conductive metal oxide such as titanium oxide and the like; or a conductive polymer such as polyphenylene derivative and the like.

An all-solid-state battery according to an embodiment may include a cathode according to any one of embodiments. For example, the all-solid-state battery may include a cathode according to any one of embodiments; and an anode.

The anode may include an anode current collector; and an anode mixture layer formed on at least one surface of the anode current collector.

Components of the anode current collector are not particularly limited, and may include a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The anode mixture layer may include a carbon-based active material such as artificial graphite, natural graphite, and the like, a silicon-based active material such as silicon oxide (SiOₓ; 0<x<2), a Si-C composite, and the like, or a metal such as lithium metal and the like.

The anode mixture layer may further include a binder. Examples of the binder include one or two or more of styrene butadiene rubber (SBR), polytetrafluoroethylene, polyvinylidene fluoride, polyethylene, vinylidene fluoride/hexafluoropropylene copolymer, polyacrylonitrile, polymethyl methacrylate, and the like.

The anode mixture layer may further include a conductive material. The conductive material may include, for example, one or two or more of graphite such as natural graphite, artificial graphite, and the like; a carbon-based material such as carbon black, acetylene black, Ketjen black, channel black, furnace black, lamp black, thermal black, a carbon fiber, a carbon nanotube (CNT), and the like; a metal powder or a metal fiber such as copper, nickel, aluminum, silver, and the like; a conductive whisker such as zinc oxide, potassium titanate, and the like; a conductive metal oxide such as titanium oxide and the like; or a conductive polymer such as polyphenylene derivative and the like.

The all-solid-state battery may further include a solid electrolyte. The solid electrolyte may be an oxide-based solid electrolyte, a sulfide-based solid electrolyte, a polymer-based solid electrolyte, or the like, and specifically, may be a sulfide-based solid electrolyte. That is, an all-solid-state battery according to an embodiment may further include a sulfide-based solid electrolyte. For example, the all-solid-state battery may include a cathode according to any one of embodiments; an anode, and a sulfide-based solid electrolyte disposed between the cathode and the anode.

The sulfide-based solid electrolyte may be at least one selected from Li₂S-P₂S₅, Li₂S-P₂S₅-LiX (X may be a halogen element), Li₂S-P₂S₅-Li₂O, Li₂S-P₂S₅- Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n may be positive numbers, and Z may be one of Ge, Zn, or Ga), Li₂S-GeS₂, Li₂S-SiS₂-Li₃PO₄, Li₂S-SiS₂-LiₚMO_{q} (p and q may be positive numbers, and M may be one of P, Si, Ge, B, Al, Ga In), Li₇₋ₓPS₆₋ₓClₓ (0≤x≤2), Li₇₋ₓPS₆₋ₓBrₓ(0≤x≤2), and Li₇₋ₓPS₆₋ₓIₓ(0≤x≤2).

The sulfide-based solid electrolyte may be an argyrodite-based solid electrolyte. The argyrodite-based solid electrolyte may be a compound represented by the following Chemical Formula 5:

[Chemical Formula 5] Liₐ⁺A⁺_{b}Q_{c}X⁻_{d}

In the Chemical Formula 5, 1≤a≤12, 0≤b≤5, 0≤c≤10, 0≤d≤2, A may be at least one of P, As, Ge, Ga, Sb, Si, Sn, Al, In, Ti, V, Nb, or Ta, Q may be at least one of S, Se, or Te, and X may be at least one of Cl, Br, I, F, CN, OCN, SCN, or N₃.

Specifically, the argyrodite-based solid electrolyte may be a compound represented by Chemical Formulas such as Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), Li₆PS₅Cl, Li₆PS₅Br, Li₆PS₅I, Li_{6.5}Sb_{0.5}Ge_{0.5}S₅I, Li_{5.7}PS_{4.7}Cl_{1.3}, Li_{6.6}Sb_{0.5}S_{0.6}S₅I, and the like.

### Mode for the Invention

### Example

### 1. Preparation of Cathode Active Material and Composite Cathode

### 1) Inventive Example

### (1) Preparation of Base Material

A base material for a cathode active material was prepared by sintering a metal hydroxide and a lithium salt. Specifically, a mixture prepared by continuously adding an aqueous solution including a metal-including salt under a co-precipitation environment was water washed, filtered, dried, and then dry-heat-treated in an oven at 700°C or more for 6 hours or more to produce a core including a lithium-transition metal composite oxide according to the following Chemical Formula 1 as an NCM-based cathode active material having a layered structure.

[Chemical Formula 1] LiₐNi_{b}M_{c}O₂

In Chemical Formula 1,
M is at least one element selected from Na, Mg, Ca, Ti, Y, Zr, Hf, V, Nb, Ta, Cr, Mo, W, Mn, Co, Fe, Cu, Ag, Zn, B, Al, Ga, C, Si, Sn, and Ba, and 0.90<a<1.5, 0.33≤b≤1, 0≤c≤0.7.

### (2) Base Material Pretreatment and Coating Layer Formation

An NCM-based cathode active material core having a layered structure, manufactured as described above, was water washed in deionized water (D.W.) (see FIG. 2a). Specifically, when water washing the base material, an aqueous solution including a complex sulfate compound represented by the following Chemical Formula 4 dissolved in deionized water (D.W.) was used to form a precursor coating layer for forming a wet coating layer on a surface of the cathode active material core:

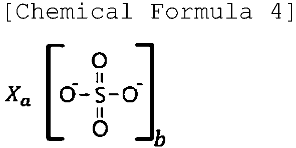

In the Chemical Formula 4,
X is selected from an alkali metal, an alkaline earth metal, a transition metal, a Group 13 element, a Group 14 element, a Group 16 element, a rare earth element, a substituted or unsubstituted aliphatic hydrocarbon group, and a combination thereof, and 1≤a≤5 and 1≤b≤5.

In this case, an amount of the injected complex sulfate compound was adjusted to 200 to 5,000 ppm based on a weight of a cathode active material in which a first coating layer formed on the surface of the core. The water washed cathode active material was then dried by heat treatment at 80°C or more for 6 hours or more, sintered in a kiln, dry heat treated in air at 180°C for 3 hours or more to form the first coating layer through phase transition of a surface layer of the core, and a second coating layer was then formed by heating and sintering the precursor coating layer, which was a coating layer precursor attached to the surface of the base material of the cathode, through a wet coating layer process (see FIG. 2b).

### 2) Comparative Examples 1 and 2

A lithium-transition metal composite oxide having a layered structure that did not undergo first and second coating layer formation processes and thus did not form first and second coating layers was used as a cathode active material in Comparative Example 1. In addition, an active material manufactured in the same manner as in Inventive Example, but without a second coating layer formation process, was used as a cathode active material of Comparative Example 2.

### 2. Preparation of Composite Cathode

A composite cathode was manufactured by mixing the cathode active materials according to Inventive Example and Comparative Examples, an argyrodite-based sulfide-based solid electrolyte, and a conductive agent (including carbon black or the like). An amount of the cathode active material was 60 wt% or more, an amount of the conductive agent was 6 wt% or less, and a remaining proportion was included as an amount of the sulfide-based solid electrolyte, based on a total weight of the composite cathode.

### 3. Preparation of Pressure Cell

The sulfide-based solid electrolyte, the manufactured cathode, and an Li-In anode were sequentially added to a pressure cell mold of a 1 cm diameter, and then pressurized to manufacture a dry pressure cell. In this case, the pressurized cell mold was placed on a lower body, an upper body was closed, initial compression was performed through a (wing) screw, and a torque wrench was tightened. Furthermore, to prevent the sulfide-based solid electrolyte from contacting moisture in the air, which could lead to generation of hydrogen sulfide and deterioration of conductivity, a space between the pressurized cells was sealed with an O-ring, and a space between a cap and a body was sealed with a parafilm.

### 4. Performance Evaluation

### 1) Formation Charge/Discharge Capacity

Charge capacity was measured by charging the pressurized cell manufactured as described above at a constant current with a current of a 0.1C rate at 30°C until a voltage reached 3.65 V, changing a mode to a constant voltage state of 3.65 V, and charging a remaining section. Discharge capacity was then measured by discharging with a constant current of a 0.1C rate until a voltage reached 1.88 V. Charge capacity values and discharge capacity values, measured for each of Inventive Example and Comparative Examples, were illustrated in FIG. 3a and Table 1.

### 2) Lifespan Performance (Capacity Retention Rate)

For the pressurized cell at 30°C, the charge capacity was measured by charging at a constant current with a current of a 0.1C rate at 30°C until a voltage reached 3.65 V, changing a mode to a constant voltage state of 3.65 V, and charging a remaining section. Discharge capacity was then measured by discharging with a constant current of a 0.1C rate until a voltage reached 1.88 V. After repeating 30 cycles or more under the following conditions, some of measured discharge capacity values according to the number of cycles were illustrated in FIG. 3b. Furthermore, a discharge capacity retention rate was measured as a percentage of initial cycle discharge capacity, and results therefrom were illustrated in FIG. 3c and Table 1.

In this case, Comparative Examples 1 and 2 and Inventive Example refer to three types of cathode active materials in which different treatments were performed, respectively. More specifically, Comparative Example 1 refers to a cathode active material in a base material having a state in which a coating layer was not formed, Comparative Example 2 refers to a cathode active material including a first coating layer in which a component of a spinel structure was included, and Inventive Example refers to a final cathode active material in which a double coating layer was formed.

### 3) Cell Resistance Characteristics

After recharging the pressurized cells that 30 cycles or more had been performed at 30°C until reached a SOC 100% range, regard to the pressurized cells of Comparative Example 1 and Inventive Example 1, an operation of measuring impedance resistance changes in immersed pressurized cells was performed with electrochemical impedance spectroscopy (EIS) using a potentiostat at 25°C, and results therefrom representing a behavior thereof as a Nyquist plot were illustrated in FIG. 4. In this case, a measurement scan range was 7 MHz to 100 mHz, resistance was measured at 10-point intervals, and sinus amplitude was 50 mV.

**[Table 1]**

| Example | Capacity (mAh/g) | | Capacity Retention Rate (%) (@ 10 Cycle) |
|---|---|---|---|
| | Charge Capacity | Discharge Capacity | |
| Comparative Ex. 1 | 210.3 | 124.3 | 71.7 |
| Comparative Ex. 2 | 199.7 | 132.1 | 65.0(@ 9 Cycle) |
| Inventive Ex. | 237.7 | 140.1 | 76.5 |

Referring to Table 1 and FIGS. 3a to 4, when the active material of Inventive Example 1, in which both the first and second coating layers were formed, was applied, capacity values and capacity retention rates of the pressurized cell were relatively superior, compared to the active materials of Comparative Example 1, in which no separate coating layer was formed, and Comparative Example 2, in which only the first coating layer was formed. This may be believed to be due to increased capacity of the active material due to improved lithium ion conductivity caused by the second coating layer including a sulfur compound. Furthermore, it was also judged that, when the second coating layer including a sulfur compound was included, intermediate layers between the base material and the solid electrolyte remained relatively stable over cycles, and lifespan characteristics were improved.

Furthermore, when the coating layer of Inventive Example 1 was applied, cell resistance values were found to be relatively lower, compared to that of Comparative Example 1. Specifically, referring to FIG. 4, Nyquist plot of Inventive Example 1 illustrated a resistance having approximately 950 ohm lower than that of Comparative Example 1, demonstrating approximately 23.1% improved resistance performance. Considering that differences between Comparative Example 1 and Inventive Example were based solely on the cathode active material, a semicircle in EIS data according to FIG. 4 was predicted to be related to the resistance of the cathode active material. Specifically, the resistance of the cathode active material may be classified into interfacial resistance between the cathode active material and the solid electrolyte, and resistance due to Li ion diffusion in the cathode active material. Considering the frequency range, resistance performance measured using EIS data according to FIG. 4 was predicted to be the interfacial resistance between the cathode active material and the solid electrolyte.

Therefore, when the second coating layer including the sulfur compound according to the following Chemical Formula 3 was formed on the first coating layer, it was expected that a resistance reduction effect due to high Li ion conductivity of the second coating layer was expected.

[Chemical Formula 3] LiₓM_{y}S_{z}O_{f}

In Chemical Formula 3,
M is selected from an alkali metal, an alkaline earth metal, a transition metal, a Group 13 element, a Group 14 element, a rare earth element, a substituted or unsubstituted aliphatic hydrocarbon group, and combinations thereof, and 0≤x≤10, 0≤y≤10, 0<z≤10, and 0≤f≤24.

Furthermore, in a case of the active material of Inventive Example 1 in which a robust dual coating layer was formed, it was expected that an inter-diffusion phenomenon between elements was suppressed and formation of a resistance layer was reduced during charge/discharge cycling. Therefore, when optimal dual coating layers were formed on the cathode active material including the lithium-transition metal composite oxide, as in Inventive Example 1, an advanced cathode active material in which electrochemical performance including capacity characteristics, lifespan characteristics, and resistance characteristics, or the like were improved, and applicable to all-solid-state batteries, may be provided.

While the embodiments of the present disclosure have been described in detail above, the scope may not be limited thereto. It will be apparent to those skilled in the art that various modifications and variations may be possible without departing from the technical spirit of the present disclosure as defined in the claims.

### [Description of Reference Characters]

- 100:: Cathode Active Material Core
- 105:: Precursor Coating Layer
- 110:: First Coating Layer
- 120:: Second Coating Layer
- 1000:: Cathode Active Material

### Industrial Applicability

As described above, features of the present disclosure may be applied, in whole or in part, to a cathode active material, a method for preparing the same, a cathode including the same, and an all-solid-state battery including the same.

## Claims

1. A cathode active material comprising:
a core including a lithium-transition metal composite oxide; and
a first coating layer formed on a surface of the core; and a second coating layer formed on a surface of the first coating layer,
wherein the first coating layer includes a lithium-transition metal composite oxide having a different structure from the lithium-transition metal composite oxide included in the core, and
the second coating layer includes a sulfur compound.

2. The cathode active material of claim 1, wherein the core includes the lithium-transition metal composite oxide having a layered structure.

3. The cathode active material of claim 1, wherein the core includes the lithium-transition metal composite oxide according to the following Chemical Formula 1:
[Chemical Formula 1] LiₐNi_{b}M_{c}O₂
In Chemical Formula 1,
M is at least one element selected from Na, Mg, Ca, Ti, Y, Zr, Hf, V, Nb, Ta, Cr, Mo, W, Mn, Co, Fe, Cu, Ag, Zn, B, Al, Ga, C, Si, Sn, and Ba, and 0.90<a<1.5, 0.33≤b≤1, 0≤c≤0.7.

4. The cathode active material of claim 1, wherein the first coating layer includes the lithium-transition metal composite oxide having a spinel structure.

5. The cathode active material of claim 4, wherein the first coating layer further includes at least one of the lithium-transition metal composite oxide having a rock salt structure or the lithium-transition metal composite oxide having a layered structure.

6. The cathode active material of claim 1, wherein the first coating layer includes the lithium-transition metal composite oxide according to the following Chemical Formula 2:
[Chemical Formula 2] LiₓM_{y}O_{z}
In Chemical Formula 2,
M is at least one element selected from Ni, Co, Mn, Na, Mg, Ca, Ti, Y, Zr, Hf, V, Nb, Ta, Cr, Mo, W, Fe, Cu, Ag, Zn, B, Al, Ga, C, Si, Sn, and Ba, and 0≤x≤4, 0≤y≤4, and 0≤z≤8.

7. The cathode active material of claim 1, wherein a thickness of the first coating layer is 0.1 to 500 nm.

8. The cathode active material of claim 1, wherein a cation mixing ratio is 7% or less.

9. The cathode active material of claim 1, wherein the sulfur compound includes at least one compound according to the following Chemical Formula 3:
[Chemical Formula 3] LiₓM_{y}S_{z}O_{f}
In Chemical Formula 3,
M is selected from an alkali metal, an alkaline earth metal, a transition metal, a Group 13 element, a Group 14 element, a rare earth element, a substituted or unsubstituted aliphatic hydrocarbon group, and combinations thereof, and 0≤x≤10, 0≤y≤10, 0<z≤10, and 0≤f≤24.

10. The cathode active material of claim 1, wherein the sulfur compound includes sulfur oxide, and
the sulfur oxide is present in an amount of 200 to 8,000 ppm, based on a total weight of the second coating layer.

11. The cathode active material of claim 1, wherein the second coating layer further includes at least one element selected from P, B, Si, Al, and W.

12. A method for preparing a cathode active material, comprising the cathode active material of any one of claims 1 to 11.

13. The method of claim 12, including:
a base material preparation operation of forming a core by a dry heat treatment process for a mixture of a precursor including a transition metal raw material and a lithium raw material; and
a base material pretreatment operation of forming a precursor coating layer on a surface of the core.

14. The method of claim 13, further including a coating layer formation operation of forming a first coating layer and a second coating layer,
wherein a first coating layer is formed by a heat treatment process for a core in the coating layer formation operation.

15. The method of claim 14, wherein, in the coating layer formation operation, the second coating layer is formed of a complex sulfate compound according to the following Chemical Formula 4: 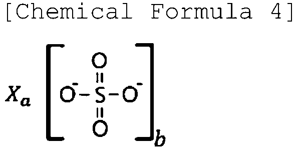 In the Chemical Formula 4,
X is selected from an alkali metal, an alkaline earth metal, a transition metal, a Group 13 element, a Group 14 element, a Group 16 element, a rare earth element, a substituted or unsubstituted aliphatic hydrocarbon group, and a combination thereof, and 1≤a≤5 and 1≤b≤5.

16. The method of claim 14, wherein, in the coating layer formation operation, the heat treatment process is performed in air at a temperature of 300°C or less and for a time of 20 hours or less.

17. A cathode comprising the cathode active material of any one of claims 1 to 11.

18. An all-solid-state battery comprising the cathode of claim 17.

19. The all-solid-state battery of claim 18, further including a sulfide-based solid electrolyte.

20. The all-solid-state battery of claim 19, wherein the sulfide-based solid electrolyte is an argyrodite-based solid electrolyte.
